# EUROPEAN PATENT SPECIFICATION

(11) **EP 2 924 004 B1**
(45) Date of publication and mention of the grant of the patent: **04.12.2019**
(21) Application number: 13856760.7
(22) Date of filing: 12.10.2013
(51) Int. Cl.: C01B 32/00, D04H 3/002, C01B 32/05, C01B 32/158, C01B 32/16, C01B 32/162

(54) **METHOD FOR PRODUCING CARBON NANOTUBE ARRAY FOR A SPINNING SOURCE MEMBER**
VERFAHREN ZUR HERSTELLUNG EINER KOHLENSTOFFNANORÖHRENANORDNUNG FÜR EIN SPINNING-QUELLELEMENT
PROCÉDÉ DE PRODUCTION D'UN RÉSEAU DE NANOTUBES DE CARBONE POUR UN ÉLÉMENT DE SOURCE DE FILAGE

(30) Priority: 22.11.2012 JP 2012255971
(43) Date of publication of application: 30.09.2015
(73) Proprietor: JNC Corporation, Chiyoda-ku Tokyo 100-8105 (JP)
(72) Inventor: INOUE, Yoku, Hamamatsu-shi Shizuoka 432-8013 (JP); NAKANISHI, Tauto, Ichihara-shi Chiba 290-8551 (JP)
(74) Representative: Müller-Boré & Partner Patentanwälte PartG mbB
(86) International application number: PCT/JP2013/077865
(87) International publication number: WO 2014/080707

(56) References cited:
- EP-A1- 2 383 225
- JP-A- 2010 115 778
- JP-A- 2011 046 604
- JP-A- 2012 018 926
- US-A1- 2010 227 058
- US-A1- 2011 008 240
- DATABASE WPI Week 200528 Thomson Scientific, London, GB; AN 2005-266199 XP002751611, -& JP 2005 068000 A (TORAY IND INC) 17 March 2005 (2005-03-17)
- DATABASE WPI Week 201036 Thomson Scientific, London, GB; AN 2010-F33143 XP002751612, -& JP 2010 115778 A (HON HAI PRECISION IND CO LTD) 27 May 2010 (2010-05-27)

## Description

The present invention relates to a method for producing a carbon nanotube array. There are further described a spinning source member formed of the carbon nanotube array produced by the method for producing the same, and a structure provided with carbon nanotubes spun from the spinning source member.

"Carbon nanotube array" herein (also referred to as "CNT array" herein) means an aggregate of CNT as comprising growth of a plurality of carbon nanotubes (also referred to as "CNT" herein) so as to align in a predetermined direction (specific one example includes a direction substantially in parallel to one normal line of a plane of a substrate) with regard to at least part of a major axis direction. In addition, length (height) of the CNT array grown from the substrate in the direction in parallel to the normal line of the substrate in a state in which the CNT array is attached on the substrate is referred to as "growth height."

Moreover, a structure having a configuration in which the plurality of CNT are entangled to each other herein is referred to as "CNT entangled body," in which the structure is formed by continuously drawing the plurality of CNT from the CNT array by taking part of CNT of the CNT array to pull the CNT so as to be separated from the CNT array (work therefor herein is also referred to as "spinning" after work for producing threads from fibers as related to a conventional art).

CNT has a specific configuration of having an outside surface formed of graphene, and therefore application in various fields is expected as a functional material and also as a structural material. Specifically, the CNT has excellent characteristics such as high mechanical strength, light weight, satisfactory electrical conduction characteristics, satisfactory heat characteristics, resistance to chemical corrosion and satisfactory field emission characteristics. Accordingly, a use of the CNT conceivably includes a lightweight and high strength wire, a probe of a scanning probe microscope (SPM), a cold cathode of a field emission display (FED), an electrically conductive resin, a high strength resin, a corrosion-resistant resin, a wear-resistant resin, a highly lubricating resin, an electrode of a secondary battery or a fuel cell, an interlayer wiring material for LSI and a biosensor.

As one of methods for producing the CNT, Patent literature No. 1 discloses a method for preforming a solid-phase metal catalyst layer on a surface of a substrate by a means such as sputtering by vapor-depositing a thin film of a metallic material, installing the substrate having the solid-phase metal catalyst layer in a reactor, and feeding a hydrocarbon gas to the reactor to form a CNT array on the substrate. Hereafter, the method for forming the solid-phase catalyst layer on the substrate, and feeding a hydrocarbon-based material into the reactor in which the substrate having the solid-phase catalyst layer is provided to produce the CNT array as described above is referred to as a solid-phase catalyst process.

As a method for highly efficiently producing a CNT array to be produced by the solid-phase catalyst process, Patent literature No. 2 discloses a method for feeding a material gas containing carbon and no oxygen, a catalyst activator containing oxygen and an atmospheric gas while meeting predetermined conditions to be brought into contact with a solid-phase catalyst layer.

A method for producing the CNT array by a method different from the method described above is also disclosed. More specifically, Patent literature No. 3 discloses a method for sublimating iron chloride to form a CNT array by a thermal CVD process under an environment in which the iron chloride exists in a gas-phase state. The method is substantially different from the arts disclosed in Patent literature Nos. 1 and 2 in applying thermal CVD without preforming the solid-phase catalyst layer on the surface of the substrate, and allowing a halogen-based material such as chlorine to exist in the environment in which the thermal CVD is applied. The method for producing the CNT array as disclosed in Patent literature No. 3 herein is also referred to as a gas-phase catalyst process.

US 2011/0008240 A1 describes a process and an apparatus for producing a carbon nanotube, a carbon nanotube fiber or the like. EP 2 383 225 A1 describes an aligned single-walled carbon nanotube assembly, a bulk aligned single-walled carbon nanotube assembly, a powder-like aligned single-walled carbon nanotube assembly and a method for producing the same.

Patent literature No. 1: JP 2004-107196 A.
Patent literature No. 2: JP 4803687 B.
Patent literature No. 3: JP 2009-196873 A.

In a method for producing a CNT array by such a gas-phase catalyst process, an elementary process for growing the CNT array is naturally different as caused by difference in a catalyst physical state from a method for producing the CNT array by a solid-phase catalyst process described above. Therefore, both are considered to be substantially different methods for producing the CNT array. Accordingly, whether or not a technical approach for improving productivity in the method for producing the CNT array by the solid-phase catalyst process can be directly applied to the method for producing the CNT array by the gas-phase catalyst process is completely unknown, and therefore an approach is required for improving the productivity suitable for the method for producing the CNT array by the gas-phase catalyst process.

Moreover, as described above, the method for producing the CNT array by the gas-phase catalyst process is substantially different from the method for producing the CNT array by the solid-phase catalyst process. Therefore, characteristics of the CNT array produced by each production method may also be different from each other. Accordingly, ease of forming a CNT entangled body (also referred to as "spinning properties" herein) to be formed of the CNT array may also be different in the CNT array produced from each production method. Accordingly, a technical guideline for producing the CNT array having excellent spinning properties is required to be independently considered for each of the method for producing the CNT array by the solid-phase catalyst process and the method for producing the CNT array by the gas-phase catalyst process.

An object of the invention is to provide a means for improving productivity of the CNT array to be produced by the gas-phase catalyst process described above and a means for improving the spinning properties of the CNT array.

The invention to be provided in order to attain the object described above is as described below.

Item 1. A method for producing a carbon nanotube array for a spinning source member, comprising: a first step for allowing a substrate having a base surface being a surface formed of a silicon oxide-containing material, as at least part of a surface thereof, to exist in an atmosphere including a gas-phase catalyst; and a second step for allowing a hydrocarbon-based material gas and a gas-phase co-catalyst to exist in the atmosphere including the gas-phase catalyst to allow a plurality of carbon nanotubes to grow on the base surface of the substrate to obtain on the base surface the carbon nanotube array formed of the plurality of carbon nanotubes, wherein the second step is applied by feeding the hydrocarbon-based material gas and the gas-phase co-catalyst into the atmosphere including the gas-phase catalyst while a flow rate thereof is controlled, and a ratio (gas-phase co-catalyst / hydrocarbon-based material gas) of the flow rate (unit: sccm) of feeding the hydrocarbon-based material gas to the flow rate (unit: sccm) of feeding the gas-phase co-catalyst is adjusted to be 5% or more and 150% or less, wherein the gas-phase co-catalyst includes acetone, and wherein the total pressure in the atmosphere in the second step is 1 × 10¹ Pa or more and 5 × 10³ Pa or less.

Item 2. The method for producing the carbon nanotube array for a spinning source member according to item 1, wherein the ratio (gas-phase co-catalyst / hydrocarbon-based material gas) is 5% or more and 120% or less.

Item 3. The method for producing the same according to any one of items 1 or 2, wherein the gas-phase catalyst includes a halide of an iron family element.

Item 4. The method for producing the same according to item 3, wherein the halide of the iron family element includes iron (II) chloride, and the hydrocarbon-based material includes acetylene.

According to a gas-phase catalyst process as related to the invention, a growth rate of a CNT array can be enhanced in comparison with a growth rate of the CNT array by the gas-phase catalyst process (also referred to as "conventional gas-phase catalyst process" herein) without using a gas-phase co-catalyst. Accordingly, productivity of the CNT array can be enhanced by applying the production method as related to the invention.

Moreover, the CNT array produced by such a production method has a broad range of geometrical conditions on having excellent spinning properties. Specifically, a CNT entangled body can be obtained even from the CNT array in growth height in which spinning has been difficult in the CNT array produced by the conventional gas-phase catalyst process. Accordingly, a CNT array having excellent spinning properties can be further stably produced by applying the production method as related to the invention.

Figure 1 is a drawing schematically showing a configuration of a production device used for a method for producing a CNT array as related to one embodiment according to the invention.
Figure 2 is a flowchart showing a method for producing a CNT array as related to one embodiment according to the invention.
Figure 3 is an image showing CNT constituting a CNT array produced by a production method as related to one embodiment according to the invention.
Figure 4 is a graph showing an outer diameter distribution of a CNT constituting a CNT array produced by a production method as related to one embodiment according to the invention.
Figure 5 is an image showing a state in which a CNT entangled body is produced by spinning a CNT array produced by a production method as related to one embodiment according to the invention.
Figure 6 is an image obtained by enlarging part of a CNT entangled body obtained from a CNT array produced by a production method as related to one embodiment according to the invention.
Figure 7 is a graph showing a relationship between CNT array growth height and CNT array growth time for the CNT array produced by a production method as related to Example 1.
Figure 8 is a graph showing a relationship between CNT array growth height and CNT array growth time for the CNT array as produced by a production method as related to Example 2.
Figure 9 is a graph showing a relationship between CNT array growth height and CNT array growth time for the CNT array as produced by a production method as related to Example 3.
Figure 10 shows an Arrhenius plot for a growth rate of a CNT array produced by a production method as related to Example 4.

An embodiment according to the invention will be described below.

### 1. Device for producing CNT array

A device for producing a CNT array as related to one embodiment according to the invention will be described with reference to a drawing.

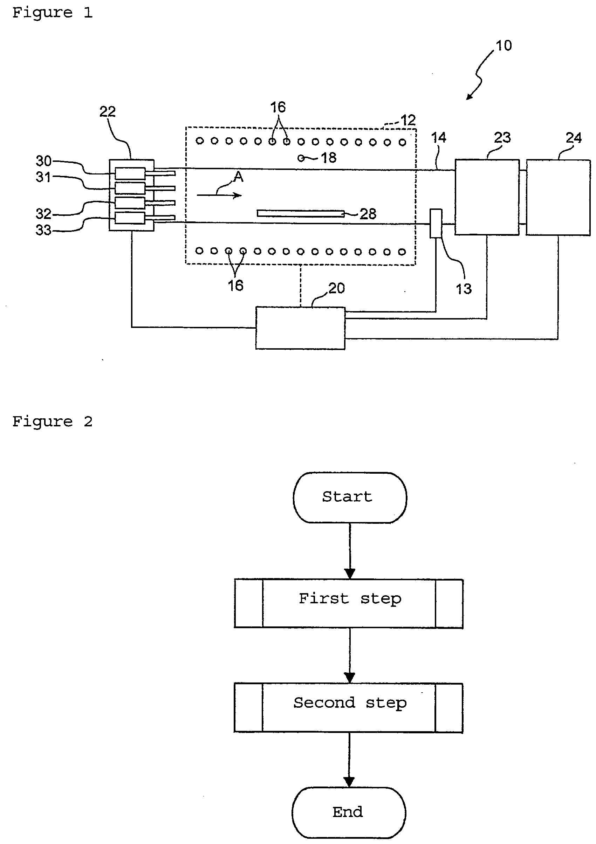

Figure 1 is a drawing schematically showing a configuration of a production device used for a method for producing the CNT array as related to one embodiment according to the invention.

As shown in Figure 1, production device 10 is provided with electric furnace 12. Electric furnace 12 takes on a substantially cylindrical shape that extends along predetermined direction A (direction in which a material gas flows) . Inside electric furnace 12, reaction vessel pipe 14 as a chamber for growing carbon nanotubes is passed through. Reaction vessel pipe 14 is a substantially cylindrically-shaped member formed of a heat-resistant material such as quartz, has an outside diameter smaller than an outside diameter of electric furnace 12, and extends along predetermined direction A. In Figure 1, substrate 28 is installed inside reaction vessel pipe 14.

Electric furnace 12 is provided with heater 16 and thermocouple 18. Heater 16 is arranged so as to surround a predetermined region (in other words, a predetermined region of substantially cylindrically-shaped reaction vessel pipe 14 in an axial direction, and hereinafter, also referred to as "heating region") in predetermined direction A of reaction vessel pipe 14 to generate heat for raising a temperature of an atmosphere in the pipe in the heating region of reaction vessel pipe 14. Thermocouple 18 is arranged in the vicinity of the heating region of reaction vessel pipe 14 inside electric furnace 12 to allow output of an electrical signal showing temperature associated with a temperature in the atmosphere in the pipe in the heating region of reaction vessel pipe 14. Heater 16 and thermocouple 18 are electrically connected to control device 20.

To one end of reaction vessel pipe 14 in predetermined direction A, gas feed device 22 is connected. Gas feed device 22 is provided with raw material gas feed unit 30, gas-phase catalyst feed unit 31, gas-phase co-catalyst feed unit 32 and auxiliary gas feed unit 33. Gas feed device 22 is electrically connected to control device 20, and also electrically connected to each feed unit of gas feed device 22.

Raw material gas feed unit 30 can feed, into an inside of reaction vessel pipe 14, a carbon compound-containing material gas (for example, a hydrocarbon gas such as acetylene) that serves as a raw material of CNT constituting the CNT array. A flow rate of feeding the material gas from raw material gas feed unit 30 can be regulated using a publicly known flow rate regulating instrument such as mass flow.

Gas-phase catalyst feed unit 31 allows feed a gas-phase catalyst into reaction vessel pipe 14. The gas-phase catalyst will be described later. A flow rate of feeding the gas-phase catalyst from gas-phase catalyst feed unit 31 can be regulated using the publicly known flow rate regulating instrument such as the mass flow.

Gas-phase co-catalyst feed unit 32 allows feed a gas-phase co-catalyst into reaction vessel pipe 14. The gas-phase co-catalyst will be described later. A flow rate of feeding the gas-phase co-catalyst from gas-phase co-catalyst feed unit 32 can be regulated using the publicly known flow rate regulating instrument such as the mass flow.

Auxiliary gas feed unit 33 allows feed of the material gas described above and a gas other than the gas-phase catalyst and the gas-phase co-catalyst, for example, an inert gas such as argon (such a gas herein is generically referred to as "auxiliary gas") into reaction vessel pipe 14. A flow rate of feeding the auxiliary gas from auxiliary gas feed unit 33 can be regulated using the publicly known flow rate regulating instrument such as the mass flow.

On the other end of reaction vessel pipe 14 in predetermined direction A, pressure regulating valve 23 and exhaust device 24 are connected. Pressure regulating valve 23 allows regulation of a pressure of gas in reaction vessel pipe 14 by changing a degree of opening and closing of the valve. Exhaust device 24 performs vacuum exhaust of the inside of reaction vessel pipe 14. Specific types of exhaust device 24 are not particularly limited, and a rotary pump, an oil diffusion pump, a mechanical booster, a turbomolecular pump, a cryopump or the like can be used alone or in combination therewith. Pressure regulating valve 23 and exhaust device 24 are electrically connected to control device 20. Moreover, pressure gauge 13 for measuring internal pressure thereof is provided inside reaction vessel pipe 14. Pressure gauge 13 is electrically connected to control device 20 to allow output of a electrical signal showing pressure inside reaction vessel pipe 14 to control device 20.

As described above, control device 20 is electrically connected to heater 16, thermocouple 18, gas feed device 22, pressure gauge 13, pressure regulating valve 23 and exhaust device 24 to input the electrical signal output from the devices or the like, and based on an input electrical signal, to control operation of the devices or the like. Examples of specific operation of control device 20 will be presented below.

Control device 20 allows input of the electrical signal output from thermocouple 18 and related to internal temperature of reaction vessel pipe 14, and to heater 16, allows output of a control signal related to operation of heater 16 as specified based on the electrical signal. Heater 16 to which the control signal from the control device is input allows operation for increasing or decreasing an amount of produced heat to change internal temperature in the heating region of reaction vessel pipe 14 based on the control signal.

Control device 20 allows input of an electrical signal output from pressure gauge 13 and related to internal pressure in the heating region of reaction vessel pipe 14, and to pressure regulating valve 23 and exhaust device 24, allows output of a control signal as related to operation of pressure regulating valve 23 and exhaust device 24 as specified based on the electrical signal. Pressure regulating valve 23 and exhaust device 24 to which the control signal from the control device is input allow operation of changing a degree of opening of pressure regulating valve 23, or changing exhausting capability of exhaust device 24, or the like, based on the control signal.

According to a preset timetable, control device 20 allows, to each device, output of a control signal for controlling operation of each device or the like. For example, control device 20 allows, to gas feed device 22, output of a control signal for specifying start and stop of feeding a gas from each of raw material gas feed unit 30, gas-phase catalyst feed unit 31, gas-phase co-catalyst feed unit 32 and auxiliary gas feed unit 33 of gas feed device 22, and the flow rate of feed thereof. Gas feed device 22 to which the control signal is input, according to the control signal, allows operation of each feed unit to start or stop feed of each gas such as the material gas into reaction vessel pipe 14.

### 2. Method for producing CNT array

The method for producing the CNT array as related to one embodiment according to the invention will be described with reference to a drawing. The method for producing the CNT array as related to the present embodiment is has two steps including a first step and a second step as shown in Figure 2.

### (1) First step

In the method for producing the CNT array as related to the present embodiment, as the first step, substrate 28 having a base surface being a surface formed of a silicon oxide-containing material, as at least part of a surface thereof is allowed to exist in an atmosphere including the gas-phase catalyst.

A specific constitution of substrate 28 is not limited. A shape thereof is arbitrary, and may include a simple shape such as a flat plate or a cylinder, or may have a three-dimensional shape in which complicated recesses and projections are provided. Moreover, an entire surface of the substrate may include the base surface, or may be in a so-called patterned state in which only part of the surface of the substrate includes the base surface, and no base surface in any other part.

The base surface is formed of the material containing the silicon oxide, and the CNT array is formed on the base surface in the second step. A detail of the material constituting the base surface is not limited as long as the material contains the silicon oxide. Specific one example of the material constituting the base surface includes quartz (SiO₂). Specific other examples of the material constituting the base surface include SiOₓ (x ≤ 2) that can be obtained by sputtering silicon in an oxygen-containing atmosphere. Specific still another example includes silicon-containing composite oxide. Specific examples of an element other than silicon and oxygen that constitute the composite oxide include Fe, Ni and Al. Specific still another example includes a compound in which a nonmetallic element such as nitrogen and boron is added to the silicon oxide.

A material constituting the base surface may be identical with or different from a material constituting substrate 28. To present specific examples, specific examples include a case where the material constituting substrate 28 is formed of quartz and the material constituting the base surface is also formed of quartz, and a case where the material constituting substrate 28 is formed of a silicon substrate based essentially on silicon, and the material constituting the base surface is formed of an oxide film thereof.

In the first step, substrate 28 having the base surface described above is allowed to exist in the atmosphere including the gas-phase catalyst. Specific examples of the gas-phase catalyst as related to the present embodiment include halide of an iron family element (namely, at least one kind of iron, cobalt and nickel) (also referred to as "iron family element halide" herein) . Specific further examples of such iron family element halide include iron fluoride, cobalt fluoride, nickel fluoride, iron chloride, cobalt chloride, nickel chloride, iron bromide, cobalt bromide, nickel bromide, iron iodide, cobalt iodide and nickel iodide. In the iron family element halide, different compounds may occasionally exist according to valence of ion of the iron family element, such as iron(II) chloride and iron(III) chloride. The gas-phase catalyst may be constituted of one kind of substance or plural kinds of substances.

A method for feeding the gas-phase catalyst into reaction vessel pipe 14 is not limited. As in production device 10 described above, the gas-phase catalyst may be fed from gas-phase catalyst feed unit 22, or may be allowed to exist inside the heating region of reaction vessel pipe 14 after installing a material (also referred to as "catalyst source" herein) in a physical condition (typically, solid-phase state) other than a gas-phase to provide the gas-phase catalyst inside the heating region of reaction vessel pipe 14 to form the gas-phase catalyst from the catalyst source by heating and/or negatively pressurizing the inside of the heating region of reaction vessel pipe 14. To present a specific example in a case of forming the gas-phase catalyst using the catalyst source, when iron(II) chloride, anhydrous, as the catalyst source is arranged inside the heating region of reaction vessel pipe 14 to sublimate the iron(II) chloride, anhydrous, by heating the inside of the heating region of reaction vessel pipe 14 and simultaneously negatively pressurizing the inside, the gas-phase catalyst formed of a vapor of the iron(II) chloride is allowed to exist in reaction vessel pipe 14.

Pressure inside reaction vessel pipe 14 in the first step, specifically, a pressure in an atmosphere in a part in which the substrate is installed is not particularly limited. The pressure may include atmospheric pressure (about 1.0 × 10⁵ Pa), negative pressure or positive pressure. When the inside of reaction vessel pipe 14 is adjusted to a negative pressure atmosphere in the second step, the atmosphere is preferably adjusted to the negative pressure also in the first step to shorten transition time between the steps. In a case where the inside of reaction vessel pipe 14 is adjusted to the negative pressure atmosphere in the first step, a specific total pressure in the atmosphere is not particularly limited. Specific one example includes adjustment to 10⁻² Pa or more and 10⁴ Pa or less.

Temperature in the atmosphere in reaction vessel pipe 14 in the first step is not particularly limited. The temperature may include ordinary temperature (about 25°C), or the atmosphere may be heated or cooled. As described later, the atmosphere inside the heating region of reaction vessel pipe 14 is preferably heated in the second step, and therefore the atmosphere in the region is preferably heated also in the first step to shorten the transition time between the steps. In a case where the atmosphere inside the heating region of reaction vessel pipe 14 is heated in the first step, the temperature of the heating region is not particularly limited. In one example, specific one example includes 8 × 10² K or more and 1.3 × 10³ K or less, and preferably, 9 × 10² K or more and 1.2 × 10³ K or less.

When the iron(II) chloride, anhydrous, is used as the catalyst source, as described above, conditions under which the catalyst source is sublimated are preferably met by heating the atmosphere inside the heating region of reaction vessel pipe 14 also in the first step. In addition, sublimation temperature of the iron(II) chloride is 950 K in the atmospheric pressure (about 1.0 × 10⁵ Pa), but can be decreased by adjusting the atmosphere inside the heating region of reaction vessel pipe 14 to the negative pressure.

The vapor of the iron (II) chloride may be fed, as part of the gas-phase catalyst, from gas-phase catalyst feed unit 31 by using the iron(II) chloride, anhydrous, as the catalyst source. In the above case, the first step can be completed by heating the iron(II) chloride, anhydrous, arranged in gas-phase catalyst feed unit 31 to sublimate the iron(II) chloride and introducing a generated vapor of the iron (II) chloride into reaction vessel pipe 14 in which substrate 28 is installed.

### (2) Second step

In the second step, a hydrocarbon-based material gas (hereinafter sometimes simply referred to as "material gas") and a gas-phase co-catalyst are allowed to exist in the atmosphere including the gas-phase catalyst realized in the first step, namely, the atmosphere inside reaction vessel pipe 14.

According to the present invention, a hydrocarbon-based material is used and specific examples include acetylene. A method for allowing the material gas to exist in the atmosphere inside reaction vessel pipe 14 is not particularly limited. As in production device 10 described above, the material gas may be allowed to exist by feeding the material gas from raw material gas feed unit 30, or a material that can generate the material gas may be allowed to previously exist inside reaction vessel pipe 14 to generate the material gas from the material and to diffuse the material gas into reaction vessel pipe 14, and thus the second step may be started. When the material gas is fed from raw material gas feed unit 30, the flow rate of feeding the material gas into reaction vessel pipe 14 is preferably controlled using a flow rate adjusting instrument. The flow rate of feed is ordinarily expressed in terms of a unit of sccm and 1 sccm means a flow rate of 1 mL per minute for gas converted under an environment of 273 K and 1.01 × 10⁵ Pa. In the case of the production device having the configuration as shown in Figure 1, the flow rate of gas to be fed into reaction vessel pipe 14 is set up based on an inside diameter of reaction vessel pipe 14, pressure measured using pressure gauge 13, or the like. Specific examples of a preferred flow rate of feeding an acetylene-containing material gas when the pressure by pressure gauge 13 is within 1 × 10² Pa or more and 1 × 10³ Pa or less include 10 sccm or more and 1,000 sccm or less, and in the above case, the flow rate thereof is further preferably adjusted to 20 sccm or more and 500 sccm or less, and particularly preferably, to 50 sccm or more and 300 sccm or less.

"Gas-phase co-catalyst" herein means a component having a function (hereinafter, also referred to as "growth promotion function") for enhancing a growth rate of the CNT array to be produced by the gas-phase catalyst process described above, and a component having a function (hereinafter, also referred to as "function for improving spinning properties") for further improving the spinning properties of the CNT array produced. A detail of the growth promotion function is not particularly limited. Specific one example includes reduction of activation energy of a reaction as related to growth of the CNT array. Moreover, a detail of the function for improving spinning properties is not particularly limited, either. Specific one example includes lengthening of spinning of a CNT entangled body to be obtained from the CNT array.

Specific components of the gas-phase co-catalyst are not particularly limited as long as the components fulfill the growth promotion function described above, and preferably, also the function for improving spinning properties. According to the present invention, the gas-phase co-catalyst includes acetone. The acetone as the gas-phase co-catalyst can reduce activation energy of the reaction upon growing the CNT array by the gas-phase catalyst process, and simultaneously can exert a favorable effect on a length of spinning upon spinning the array among characteristics as related to the spinning properties of the CNT array obtained. A detail of the functions thereof will be described in Examples.

A method for allowing the gas-phase co-catalyst to exist in the atmosphere inside reaction vessel pipe 14 in the second step is not particularly limited. As in production device 10 described above, the gas-phase co-catalyst may be allowed to exist by feeding the gas-phase co-catalyst from gas-phase co-catalyst feed unit 32, or a material that can generate the gas-phase co-catalyst may be previously allowed to exist in reaction vessel pipe 14 to generate the gas-phase co-catalyst from the material by a means such as heating and vacuuming and to diffuse the gas-phase co-catalyst in reaction vessel pipe 14.

When the gas-phase co-catalyst is fed from gas-phase co-catalyst feed unit 32, the flow rate of feeding the gas-phase co-catalyst into reaction vessel pipe 14 is preferably controlled using the flow rate adjusting instrument. Specific examples of a preferred flow rate of feeding the acetone being one example of the gas-phase co-catalyst when a pressure of pressure gauge 13 is 1 × 10² Pa or more and 1 × 10³ Pa or less include 10 sccm or more and 1,000 sccm or less, and in the above case, the flow rate thereof is adjusted to, further preferably, 20 sccm or more and 500 sccm or less, and particularly preferably, 50 sccm or more and 300 sccm or less. When the material gas (specific example: acetylene) and the gas-phase co-catalyst (specific example: acetone) are respectively fed from raw material gas feed unit 30 and gas-phase co-catalyst feed unit 32, a ratio (gas-phase co-catalyst / material gas) of the flow rate (unit: sccm) of feeding the gas-phase co-catalyst to the flow rate (unit: sccm) of feeding the material gas is adjusted to 150% or less and 5% or more, further preferably, 5% or more and 120% or less, and particularly preferably, 10% or more and 100% or less. Adjustment to such a ratio allows further stable enhancement of the growth rate of the CNT array.

Thus, a degree of the growth promotion function of the acetone as the gas-phase co-catalyst varies depending on quantitative relation with the material gas, and an effect of incorporating the acetone as the gas-phase co-catalyst thereinto is relatively significantly confirmed in an early stage of the reaction, and therefore the acetone as the gas-phase co-catalyst may be further strongly involved in a relatively initial stage in a process of allowing growth of the CNT array by interaction of the material gas with the catalyst.

In the second step, timing of allowing the material gas to exist in the atmosphere within reaction vessel pipe 14, and timing of allowing the gas-phase co-catalyst to exist therein are not particularly limited. Either may be first or both may be simultaneous. However, a state of allowing only the material gas to exist therein without presence of the gas-phase co-catalyst leads to start growing the CNT array based on interaction between the material gas and the gas-phase catalyst, which is namely corresponded to production of the CNT array by a conventional gas-phase catalyst process, and therefore such a state has tendency of obtaining no sufficient advantage of allowing the gas-phase co-catalyst to incorporated thereinto. Therefore, the gas-phase co-catalyst is preferably set so as to exist in the atmosphere within reaction vessel pipe 14 prior to or simultaneously with the material gas.

In the atmosphere within reaction vessel pipe 14 in the second step, for example, an auxiliary gas may be allowed to exist for the purpose of regulating total pressure in a predetermined range. Specific examples of the auxiliary gases include a gas having a relatively low influence on formation of the CNT array, more specifically, an inert gas such as an argon gas. A method for allowing the auxiliary gas to exist in the atmosphere inside reaction vessel pipe 14 is not particularly limited. As in production device 10 described above, a feeder is provided with auxiliary gas feed unit 33, and feed of the auxiliary gas into the atmosphere inside reaction vessel pipe 14 from auxiliary gas feed unit 33 is simple, and excellent in controllability, and thus such a configuration is preferred.

The total pressure in the atmosphere inside reaction vessel pipe 14 in the second step is adjusted to 1 × 10¹ Pa or more and 5 × 10³ Pa or less, preferably, 2 × 10¹ Pa or more and 5 × 10³ Pa or less, further preferably, 5 × 10¹ Pa or more and 2 × 10³ Pa or less, and particularly preferably, 1 × 10² Pa or more and 1 × 10³ Pa or less.

Temperature in the atmosphere inside the heating region of reaction vessel pipe 14 in the second step is not particularly limited as long as the CNT array can be formed using the material gas in the atmosphere in which the gas-phase catalyst and the gas-phase co-catalyst exist. When the gas-phase catalyst is obtained by heating the catalyst source such as the iron(II) chloride described above, the temperature in the atmosphere inside the heating region of reaction vessel pipe 14 is set up to temperature equal to or higher than the temperature at which the gas-phase catalyst is formed.

As temperature on the base surface in the second step, the base surface is heated to 8 × 10² K or higher. When the temperature on the base surface is 8 × 10² K or higher, interaction among the gas-phase catalyst, the gas-phase co-catalyst and the material gas on the base surface is easily effected to facilitate the growth of the CNT array on the base surface. From a viewpoint of easily producing the interaction, as the temperature on the base surface in the second step, the base surface is preferably heated to 9 × 10² K or higher. An upper limit of the temperature on the base surface in the second step is not particularly limited, but when the temperature is excessively high, a material constituting the base surface or a material constituting the substrate (the materials may be occasionally identical) may occasionally lack in stability as solid, and therefore the upper limit is preferably set up in consideration of a melting point and a sublimation temperature of the materials. When a load of the reaction vessel pipe is taken into consideration, the upper limit of the temperature is preferably adjusted to about 1.5 × 10³ K.

### 3. CNT array

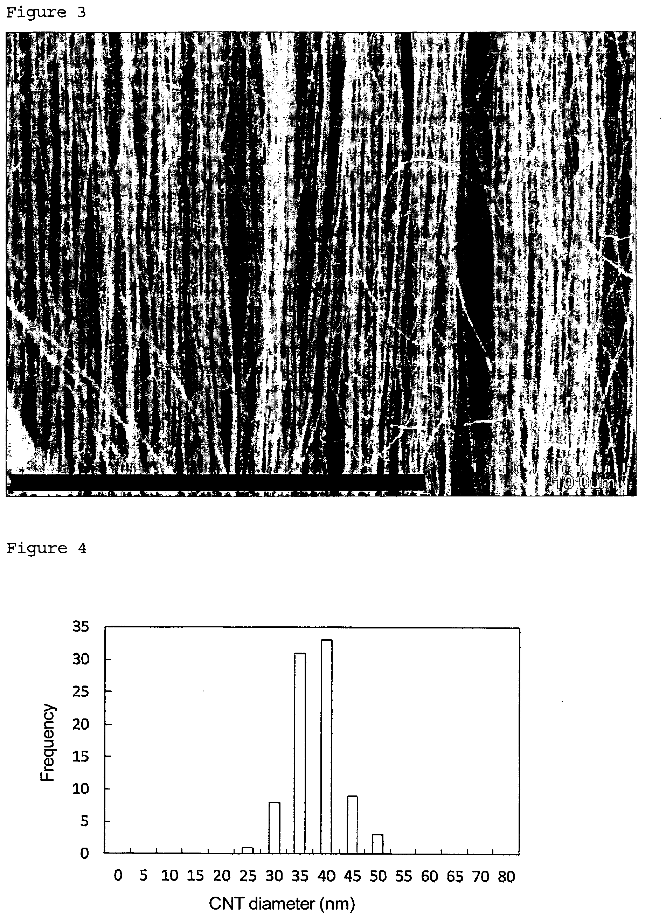

As one example of the CNT array produced by the production method as related to the present embodiment, as shown in Figure 3, the CNT array has a part having a configuration in which a plurality of CNT are arranged so as to be aligned in a predetermined direction. When diameters of the plurality of CNT in the part are measured to determine a distribution thereof, as shown in Figure 4, most of the diameters of the CNT are within the range of 20 to 50 nanometers.

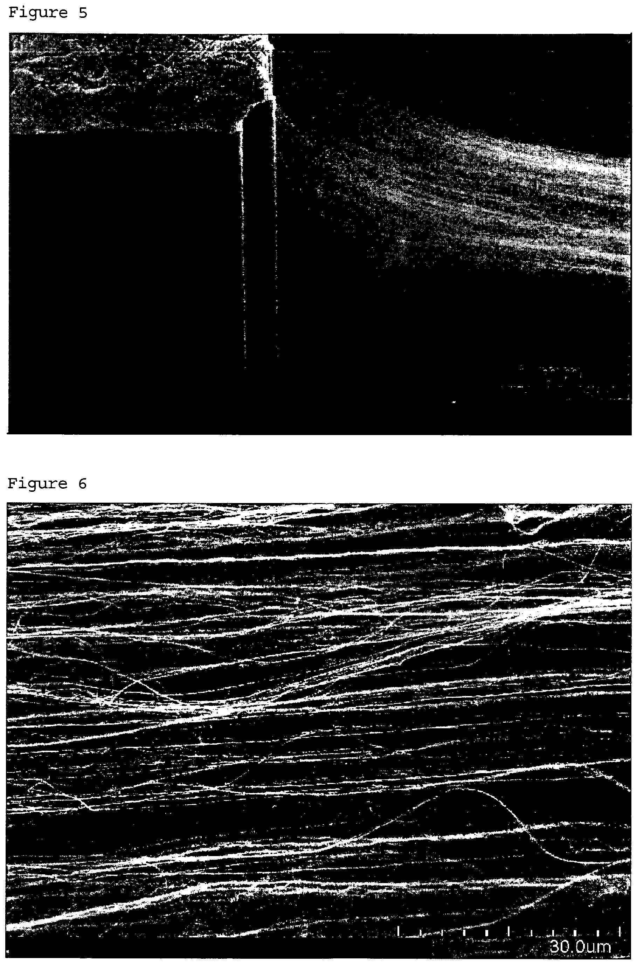

The CNT array produced by the production method as related to the present embodiment is excellent in the spinning properties. Specifically, the CNT constituting the CNT array is taken, and drawn (spun) in a direction to be separated from the CNT array, and thus a structure (CNT entangled body) having the plurality of CNT entangled to each other can be obtained. Figure 5 is an image showing a state in which the CNT entangled body is formed of the CNT array, and Figure 6 is an image in which part of the CNT entangled body is enlarged. As shown in Figure 5, the CNT constituting the CNT array is continuously drawn, and thus the CNT entangled body is formed. Moreover, as shown in Figure 6, the CNT constituting the CNT entangled body is entangled to each other while aligning in a direction (spinning direction) in which the CNT is drawn from the CNT array to form a connected body. A member having the CNT array and allowing formation of the CNT entangled body herein is also referred to as "spinning source member".

All of the CNT arrays cannot always serve as the spinning source member, and the CNT array that can form the CNT entangled body has a geometrical restriction. One of specific examples of restrictions thereof includes CNT array growth height (height in a state in which the CNT array is formed) . More specifically, when the CNT array growth height is excessively low, drawn CNT becomes difficult to be entangled to cause difficulty in obtaining the CNT entangled body. Ease of formation of the CNT entangled body from the CNT array (spinning properties) can be evaluated by a length (length in a direction of drawing the CNT from the CNT array), in the spinning direction, of the CNT entangled body formed of the CNT array. In the case of the CNT array having poor spinning properties, the CNT entangled body is detached from the CNT array before the CNT entangled body reaches sufficient spun length. On the other hand, in the case of the CNT array having particularly excellent spinning properties, the CNT entangled body is not detached from the CNT array until all of the CNT constituting the CNT array form the CNT entangled body.

In the CNT array produced by the production method as related to the present embodiment, a CNT array growth height range in which the spinning properties are decreased is wider in comparison with the CNT array produced by the production method as related to a conventional art, namely, the gas-phase catalyst process without using the gas-phase co-catalyst. More specifically, the CNT array produced by the production method as related to the present embodiment is used as the spinning source member, and thus the CNT entangled body in which length of individual CNT is various can be further stably produced in comparison with a case of using the CNT array as related to the conventional method.

Excellence in the spinning properties of the CNT array produced by the production method as related to the present embodiment will be specifically described below. When the CNT entangled body is formed using the CNT array produced by the gas-phase catalyst process using the acetone as the material gas and the iron(II) chloride, anhydrous, as the catalyst source, the CNT array growth height range in which good spinning properties (specific examples include 1 cm or more in spinning length) are obtained is limited to a predetermined range. An upper limit thereof and a lower limit thereof vary depending on production conditions, but in terms of a height range (upper limit height - lower limit height), the range is about 0.5 millimeter. On the other hand, in the case of the CNT array produced by the method using the acetone as the gas-phase co-catalyst in the gas-phase catalyst process described above, the CNT array growth height range in which the spinning properties described above become satisfactory is extended in both of the lower limit and the upper limited in comparison with the case without using the gas-phase co-catalyst, and the range can be two times or more, namely, 1 millimeter or more, and in a preferred one embodiment, the range reaches about three times or more, namely, about 1.5 millimeters or more.

When the excellence in the spinning properties of the CNT array produced by the production method as related to the present embodiment is described from another viewpoint, in one preferred embodiment, the CNT array produced by the production method as related to the present embodiment allows stable spinning to be 1 centimeter or more in the spinning length even when the CNT array growth height is 2 millimeters or more.

Such a CNT array having excellent spinning properties is difficult to obtain by the gas-phase catalyst process without using the gas-phase co-catalyst. In the case of a solid-phase catalyst process, a process for producing the CNT array is different from a process in the case of the gas-phase catalyst process, and therefore a basic configuration of the CNT array obtained may also be different from the configuration in the case of the gas-phase catalyst process. Therefore, although simple comparison is quite difficult, no report has been made yet on results showing sable production of the CNT array having excellent spinning properties as described above.

An increase in the upper limit of the CNT array growth height range in which the spinning properties becomes satisfactory is preferred from a viewpoint of improving the characteristics of the CNT entangled body obtained from the CNT array. More specifically, the CNT entangled body obtained from the CNT array having a large value of growth height has a relatively large value of length in a major axis direction of the CNT constituting the CNT entangled body, and therefore a degree of inter-CNT interaction easily becomes large. Therefore, mechanical characteristic (for example, tensile strength), electrical characteristics (for example, volume electric conductivity), heat characteristics (for example, heat conductivity) and so forth when the CNT entangled body has a thread-shaped form or a web-shaped form are easily improved.

A reason why the spinning source member having the CNT array produced by the production method as related to the present embodiment is excellent in the spinning properties as described above is unknown. When drawing (spinning) of the CNT from the CNT array continuously progresses, the drawn CNT are suitably entangled to each other, and simultaneously the drawn CNT suitably interact with the CNT existing in a closest position (hereinafter, referred to as "closest position CNT") on a side opposite to the direction in which the CNT is drawn in the drawing direction, and thus the closest position CNT is drawn. Accordingly, an increase in the spinning length of the CNT entangled body spun from the CNT array requires a suitable balance of an interaction between the CNT to be drawn and the CNT already drawn, and an interaction between the CNT to be drawn and the closest position CNT. A spinning co-catalyst may be involved in forming the CNT array in which the balance of the interactions becomes suitable.

### 4. CNT entangled body

The CNT entangled body obtained from the spinning source member can have various shapes. Specific one example includes a linear shape, and specific another example includes a web shape. A linearly-shaped CNT entangled body can be handled in a manner equivalent to fibers, and used also as electrical wiring. Moreover, a web-shaped CNT entangled body can be directly handled in a manner similar to a nonwoven fabric.

The length of the CNT entangled body in the spinning direction is not particularly limited, and needs to be appropriately set up according to an intended use. In general, the spinning length of 2 millimeters or more allows application of the CNT entangled body to a part level such as a contact part and an electrode. Moreover, in the web-shaped CNT entangled body, a degree of alignment of the CNT constituting the body can be arbitrarily controlled by changing a spinning method from the spinning source member. Accordingly, the CNT entangled body in which the mechanical characteristics or the electrical characteristics are different can be produced by changing the spinning method from the spinning source member.

If a degree of entanglement is decreased, the CNT entangled body becomes fine in the case of the linear shape, and thin in the case of the web shape. If the degree progresses, the CNT entangled body becomes difficult to visually observe, and the CNT entangled body on the occasion can be used as transparent fibers, transparent wiring or a transparent web (transparent sheet-shaped member).

The CNT entangled body may be formed of only the CNT or a composite structure with any other material. As described above, the CNT entangled body has the configuration formed of the plurality of CNT being entangled to each other, and therefore a void exists among the plurality of entangled CNT in a manner similar to a plurality of fibers constituting the nonwoven fabric. The composite structure can be easily formed by introducing powder (specific examples include metal fine particles, inorganic particles such as particles of silica and organic particles such as particles of an ethylene-based polymer) into a void portion thereof or impregnation with a liquid thereinto.

Moreover, the surface of the CNT constituting the CNT entangled body may be modified. In the CNT, an outside surface is constituted of graphene, and therefore the CNT entangled body is hydrophobic as is, but hydrophilic treatment is applied to the surface of the CNT constituting the CNT entangled body, and thus the CNT entangled body can be made hydrophilic. Specific one example of such a hydrophilization means includes plating treatment. In the above case, the CNT entangled body obtained is formed into the composite structure between the CNT and a plated metal.

The embodiment described above is set forth in order to facilitate understanding of the invention, and not to limit the invention. Therefore, each of the elements disclosed in the embodiment described above also includes all design modifications and equivalents belonging to the technical scope of the invention.

### Examples

The invention will be further specifically described by way of Examples or the like below, but the scope of the invention is not limited to the Examples or the like.

### (Example 1)

A production device having a configuration shown in Figure 1 was used, and a CNT array was produced by a production method shown in Figure 2.

Specifically, a first step was first applied as described below.

A quartz plate (20 mm × 5 mm × 1 mm in thickness) was placed on a boat formed of quartz in a reaction vessel pipe of the production device having the configuration shown in Figure 1. Accordingly, in the present Example, all of a material constituting a base surface and a material constituting a substrate were quartz. Moreover, iron(II) chloride, anhydrous, as a catalyst source was placed on a part other than the boat in the reaction vessel pipe.

An inside of the reaction vessel pipe was exhausted to 1 × 10⁻¹ Pa or less using an exhaust device, and then the inside of the reaction vessel pipe (including the substrate) was heated to 1.1 × 10³ K using a heater. As a result, the iron(II) chloride, anhydrous, was sublimated within the reaction vessel pipe, and an inside of a heating region of the reaction vessel pipe turned into an atmosphere including a gas-phase catalyst formed of the iron(II) chloride, anhydrous, as the catalyst source.

Thus, the first step was applied, and then an atmosphere pressure was maintained at 5 × 10² Pa using a pressure regulating valve, and simultaneously while a temperature in the reaction vessel pipe (including the substrate) was maintained at 1.1 × 10³ K using a heater, a second step was applied by feeding acetylene as a material gas from a raw material gas feed unit, and acetone as a gas-phase co-catalyst from a gas-phase co-catalyst feed unit into the reaction vessel pipe at flow rates shown in Table 1, respectively.

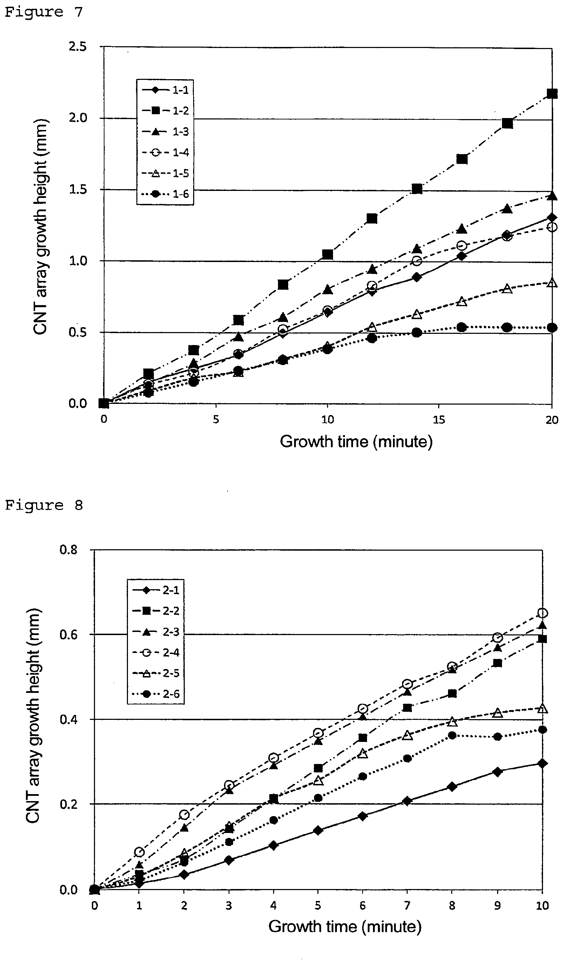

A CNT array grown on the base surface by starting the second step, namely, starting feed of acetylene and acetone. The CNT array was photographed from a direction parallel to the base surface using a camera every 2 minute to measure CNT array growth height for 20 minutes after starting the second step. The results are presented in Table 1 and Figure 7.

**Table 1**

| Test | Flow rate (sccm) | | | CNT array growth height (mm) | | | | | | | | | | | Growth rate (µm/min) for 10 minutes after start |
|---|---|---|---|---|---|---|---|---|---|---|---|---|---|---|---|
| | Acetylene | Acetone | Total amount | 0 min | 2 min | 4 min | 6 min | 8 min | 10 min | 12 min | 14 min | 16 min | 18 min | 20 min | |
| 1-1 | 200 | 0 | 200 | 0 | 0.1 | 0.2 | 0.3 | 0.5 | 0.6 | 0.8 | 0.9 | 1.0 | 1.2 | 1.3 | 65 |
| 1-2 | 180 | 20 | 200 | 0 | 0.2 | 0.4 | 0.6 | 0.8 | 1.1 | 1.3 | 1.5 | 1.7 | 2.0 | 2.2 | 108 |
| 1-3 | 160 | 40 | 200 | 0 | 0.1 | 0.3 | 0.5 | 0.6 | 0.8 | 1.0 | 1.1 | 1.2 | 1.4 | 1.5 | 81 |
| 1-4 | 140 | 60 | 200 | 0 | 0.1 | 0.2 | 0.4 | 0.5 | 0.7 | 0.8 | 1.0 | 1.1 | 1.2 | 1.2 | 66 |
| 1-5 | 120 | 80 | 200 | 0 | 0.1 | 0.2 | 0.2 | 0.3 | 0.4 | 0.5 | 0.6 | 0.7 | 0.8 | 0.9 | 40 |
| 1-6 | 100 | 100 | 200 | 0 | 0.1 | 0.2 | 0.2 | 0.3 | 0.4 | 0.5 | 0.5 | 0.5 | 0.5 | 0.5 | 39 |

### (Example 2)

First, a first step was applied as described below.

A silicon plate (20 mm × 5 mm × 1 mm in thickness) having a 0.95 µm-thick thermal oxide film formed on a surface thereof was placed on a boat formed of quartz in a reaction vessel pipe of a production device having a configuration shown in Figure 1. Accordingly, in the present Example, a material constituting a base surface was a silicon oxide film, and a material constituting a substrate was silicon. Moreover, iron(II) chloride, anhydrous, as a catalyst source was placed on a part other than the boat in the reaction vessel pipe.

An inside of the reaction vessel pipe was exhausted to 1 × 10⁻¹ Pa or less using an exhaust device, and then the inside of the reaction vessel pipe (including the substrate) was heated to 1.1 × 10³ K using a heater. As a result, the iron(II) chloride, anhydrous, was sublimated within the reaction vessel pipe, and an inside of a heating region of the reaction vessel pipe turned into an atmosphere including a gas-phase catalyst formed of the iron(II) chloride, anhydrous, as the catalyst source.

Thus, the first step was applied, and then an atmosphere pressure was maintained at 4 × 10² Pa using a pressure regulating valve, and simultaneously while a temperature in the reaction vessel pipe (including the substrate) was maintained at 1.1 × 10³ K using a heater, a second step was applied by feeding acetylene as a material gas from a raw material gas feed unit, acetone as a gas-phase co-catalyst from a gas-phase co-catalyst feed unit, and an argon gas as an inert gas from an auxiliary gas feed unit into the reaction vessel pipe at flow rates shown in Table 2, respectively.

A CNT array grown on the base surface by starting the second step, namely, starting feed of acetylene and acetone. The CNT array was photographed from a direction parallel to the base surface using a camera every 1 minute to measure CNT array growth height for 10 minutes after starting the second step. The results are presented in Table 2 and Figure 8.

**Table 2**

| Test | Flow rate (sccm) | | | | CNT array growth height (mm) | | | | | | | | | | | Growth rate (µm/min) for 5 minutes after start |
|---|---|---|---|---|---|---|---|---|---|---|---|---|---|---|---|---|
| | Acetylene | Acetone | Argon | Total amount | 0 min | 1 min | 2 min | 3 min | 4 min | 5 min | 6 min | 7 min | 8 min | 9 min | 10 min | |
| 2-1 | 100 | 0 | 100 | 200 | 0 | 0.01 | 0.04 | 0.07 | 0.10 | 0.14 | 0.17 | 0.21 | 0.24 | 0.28 | 0.30 | 28 |
| 2-2 | 100 | 20 | 80 | 200 | 0 | 0.04 | 0.07 | 0.14 | 0.21 | 0.28 | 0.36 | 0.43 | 0.46 | 0.53 | 0.59 | 58 |
| 2-3 | 100 | 40 | 60 | 200 | 0 | 0.06 | 0.15 | 0.23 | 0.29 | 0.35 | 0.41 | 0.47 | 0.52 | 0.57 | 0.62 | 72 |
| 2-4 | 100 | 60 | 40 | 200 | 0 | 0.09 | 0.18 | 0.24 | 0.31 | 0.37 | 0.43 | 0.48 | 0.52 | 0.59 | 0.65 | 73 |
| 2-5 | 100 | 80 | 20 | 200 | 0 | 0.03 | 0.09 | 0.15 | 0.21 | 0.26 | 0.32 | 0.36 | 0.40 | 0.42 | 0.43 | 54 |
| 2-6 | 100 | 100 | 0 | 200 | 0 | 0.02 | 0.06 | 0.11 | 0.16 | 0.21 | 0.27 | 0.31 | 0.36 | 0.36 | 0.38 | 44 |

### (Example 3)

First, a first step was applied as described below.

A silicon plate (20 mm × 5 mm × 1 mm in thickness) having a 0.95 µm-thick thermal oxide film formed on a surface thereof was placed on a boat formed of quartz in a reaction vessel pipe of a production device having a configuration shown in Figure 1. Accordingly, in Example 3, a material constituting a base surface was a silicon oxide film, and a material constituting a substrate was silicon. Moreover, iron(II) chloride, anhydrous, as a catalyst source was placed on a part other than the boat in the reaction vessel pipe.

An inside of the reaction vessel pipe was exhausted to 1 × 10⁻¹ Pa or less using an exhaust device, and then the inside of the reaction vessel pipe (including the substrate) was heated to 1.1 × 10³ K using a heater. As a result, the iron(II) chloride, anhydrous, was sublimated within the reaction vessel pipe, and an inside of a heating region of the reaction vessel pipe turned into an atmosphere including a gas-phase catalyst formed of the iron(II) chloride, anhydrous, as the catalyst source.

Thus, the first step was applied, and then an atmosphere pressure was maintained at pressure presented in Table 3 using a pressure regulating valve, and simultaneously while temperature in the reaction vessel pipe (including the substrate) was maintained at 1.1 × 10³ K using a heater, a second step was applied by feeding acetylene as a material gas from a raw material gas feed unit at a flow rate of 100 sccm, acetone as a gas-phase co-catalyst from a gas-phase co-catalyst feed unit at a flow rate of 40 sccm, and an argon gas as an inert gas from an auxiliary gas feed unit at a flow rate of 60 sccm into the reaction vessel pipe.

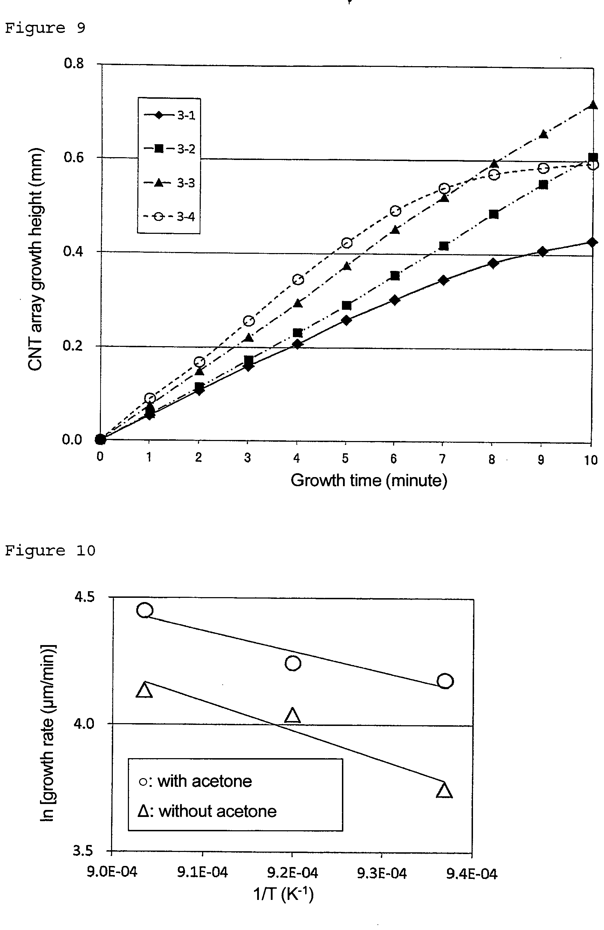

A CNT array grown on the base surface by starting the second step, namely, starting feed of acetylene and acetone. The CNT array was photographed from a direction parallel to the base surface using a camera every 1 minute to measure CNT array growth height for 10 minutes after starting the second step. The results are presented in Table 3 and Figure 9.

**Table 3**

| Test | Pressure (10² Pa) | CNT array growth height (mm) | | | | | | | | | | | Growth rate (µm/min) for 5 minutes after start |
|---|---|---|---|---|---|---|---|---|---|---|---|---|---|
| | | 0 min | 1 min | 2 min | 3 min | 4 min | 5 min | 6 min | 7 min | 8 min | 9 min | 10 min | |
| 3-1 | 3 | 0 | 0.05 | 0.11 | 0.16 | 0.21 | 0.26 | 0.30 | 0.35 | 0.38 | 0.41 | 0.43 | 52 |
| 3-2 | 5 | 0 | 0.06 | 0.11 | 0.17 | 0.23 | 0.29 | 0.35 | 0.42 | 0.49 | 0.55 | 0.61 | 58 |
| 3-3 | 8 | 0 | 0.07 | 0.15 | 0.22 | 0.30 | 0.37 | 0.45 | 0.52 | 0.60 | 0.66 | 0.72 | 74 |
| 3-4 | 11 | 0 | 0.09 | 0.17 | 0.26 | 0.34 | 0.42 | 0.49 | 0.54 | 0.57 | 0.59 | 0.60 | 85 |

### (Example 4)

First, a first step was applied as described below.

A silicon plate (20 mm × 5 mm × 1 mm in thickness) having a 0.45 µm-thick thermal oxide film formed on a surface thereof was placed on a boat formed of quartz in a reaction vessel pipe of a production device having a configuration shown in Figure 1. Accordingly, in the present Example, a material constituting a base surface was a silicon oxide film, and a material constituting a substrate was silicon. Moreover, iron(II) chloride, anhydrous, as a catalyst source was placed on a part other than the boat in the reaction vessel pipe.

An inside of the reaction vessel pipe was exhausted to 1 × 10⁻¹ Pa or less using an exhaust device, and then the inside of the reaction vessel pipe (including the substrate) was heated to temperature presented in Table 4 using a heater. As a result, in the case of all of temperatures, the iron (II) chloride, anhydrous, was sublimated within the reaction vessel pipe, and an inside of a heating region of the reaction vessel pipe turned into an atmosphere including a gas-phase catalyst formed of the iron(II) chloride, anhydrous, as the catalyst source.

Thus, the first step was applied, and then an atmosphere pressure was maintained at a pressure of 8 × 10² Pa using a pressure regulating valve, and simultaneously while temperature in the reaction vessel pipe (including the substrate) was maintained at the temperature presented in Table 4 using a heater, a second step was applied by feeding acetylene as a material gas from a raw material gas feed unit, acetone as a gas-phase co-catalyst from a gas-phase co-catalyst feed unit (no acetone was fed in test 4-4 to test 4-6 being control tests), and an argon gas as an inert gas from an auxiliary gas feed unit at flow rates presented in Table 4 into the reaction vessel pipe.

A CNT array grown on the base surface by starting the second step, namely, starting feed of acetylene and acetone (acetylene in test 4-4 to test 4-6 being control tests) . The CNT array was photographed from a direction parallel to the base surface using a camera every 1 minute to measure CNT array growth height for 3 minutes after starting the second step. A CNT array growth rate (unit: µm/min) was determined from the results, and an Arrhenius plot was prepared for the thus determined the CNT array growth rates (with acetone: tests 4-1 to 4-3, without acetone: tests 4-4 to 4-6) to determine activation energy for each of cases where acetone was used as the gas-phase co-catalyst and where no acetone was used. The results are presented in Table 4 and Figure 10.

**Table 4**

| Test | Temperature in pipe (10³ K) | Flow rate (sccm) | | | | Growth rate (µm/min) for 3 minutes after start | Activation energy (eV/atom) |
|---|---|---|---|---|---|---|---|
| | | Acetylene | Acetone | Argon | Total amount | | |
| 4-1 | 1.07 | 100 | 40 | 60 | 200 | 60 | 0.86 |
| 4-2 | 1.09 | | | | | 70 | |
| 4-3 | 1.11 | | | | | 84 | |
| 4-4 | 1.07 | 100 | 0 | 100 | 200 | 41 | 0.99 |
| 4-5 | 1.09 | | | | | 55 | |
| 4-6 | 1.11 | | | | | 60 | |

### (Example 5)

First, a first step was applied as described below.

A silicon plate (20 mm × 5 mm × 1 mm in thickness) having a 0.45 µm-thick thermal oxide film formed on a surface thereof was placed on a boat formed of quartz in a reaction vessel pipe of a production device having a configuration shown in Figure 1. Accordingly, in the present Example, a material constituting a base surface was a silicon oxide film, and a material constituting a substrate was silicon. Moreover, iron(II) chloride, anhydrous, as a catalyst source was placed on a part other than the boat in the reaction vessel pipe.

An inside of the reaction vessel pipe was exhausted to 1 × 10⁻¹ Pa or less using an exhaust device, and then the inside of the reaction vessel pipe (including the substrate) was heated to 1.1 × 10³ K using a heater. As a result, in the case of all of temperatures, the iron(II) chloride, anhydrous, was sublimated within the reaction vessel pipe, and an inside of a heating region of the reaction vessel pipe turned into an atmosphere including a gas-phase catalyst formed of the iron(II) chloride, anhydrous, as the catalyst source.

Thus, the first step was applied, and then an atmosphere pressure was maintained at a pressure of 8 × 10² Pa using a pressure regulating valve, and simultaneously while temperature in the reaction vessel pipe (including the substrate) was maintained at to 1.1 × 10³ K using a heater, a second step was applied by feeding acetylene as a material gas from a raw material gas feed unit, and acetone as a gas-phase co-catalyst from a gas-phase co-catalyst feed unit (no acetone was fed in test 5-8 to test 5-14 being control tests) at flow rates presented in Table 5 into the reaction vessel pipe.

A CNT array grown on the base surface by starting the second step, namely, starting feed of acetylene and acetone (acetylene in test 5-8 to test 5-14 being control tests) . The CNT array was measured from a direction parallel to the base surface using a camera every 1 minute to stop feed of acetylene or the like at a time point at which CNT array growth height reached height presented in Table 5, and thus terminating the second step.

Heating by the heater was terminated to confirm that the temperature in the reaction vessel pipe reached room temperature, and then exhausting of the inside of the reaction vessel pipe by the exhaust device was terminated to introduce atmospheric air into the reaction vessel pipe to adjust the atmosphere pressure to atmospheric pressure (1 × 10⁵ Pa). Then, the reaction vessel pipe was opened and the CNT array with the substrate was removed.

Part of CNT including the CNT placed on a side surface of the CNT array was taken to pull the taken CNT so as to be separated from the CNT array. As a result, when a CNT entangled body was obtained, length (spinning length) of the CNT entangled body in a pulling direction when the CNT entangled body was detached from the CNT array was measured to evaluate spinning properties based on criteria described below.
A: more than 1 m in the spinning length.
B: more than 10 cm and 1 m or less in the spinning length.
C: 1 cm or more and 10 cm or less in the spinning length.
D: less than 1 cm in the spinning length, or no CNT entangled body was substantially obtained.

Evaluation results are presented in Table 5.

**Table 5**

| Test | Flow rate (sccm) | | | CNT array growth height (mm) | Spinning properties |
|---|---|---|---|---|---|
| | Acetylene | Acetone | Total amount | | |
| 5-1 | 190 | 10 | 200 | 0.4 | A |
| 5-2 | | | | 0.6 | A |
| 5-3 | | | | 0.8 | A |
| 5-4 | | | | 1.2 | A |
| 5-5 | | | | 1.3 | A |
| 5-6 | | | | 1.9 | B |
| 5-7 | | | | 2.0 | C |
| 5-8 | 200 | 0 | 200 | 0.4 | C |
| 5-9 | | | | 0.7 | A |
| 5-10 | | | | 0.8 | C |
| 5-11 | | | | 0.9 | C |
| 5-12 | | | | 1.0 | C |
| 5-13 | | | | 1.2 | D |
| 5-14 | | | | 1.4 | D |

As shown in Table 5, the CNT arrays (tests 5-1 to 5-7) produced by the production method as related to examples of the invention allow formation of the CNT entangled body (specifically, the CNT entangled body having a length of 1 cm or more), and presumably are a favorable spinning source member. Moreover, the spinning source members (tests 5-1 to 5-7) formed of the CNT array produced by the production method as related to examples of the invention has excellent spinning properties. As shown in Table 5, the spinning source members (tests 5-1 to 5-5) formed of the CNT array having a growth height of 0.4 millimeter or more and 1.3 millimeters or less allow spinning in a length of more than 1 meter. As shown in Table 5, the spinning source members (tests 5-3 to 5-5) formed of the CNT array having a growth height of 0.8 millimeter or more and 1.3 millimeters or less allow spinning in a length of more than 1 meter. As shown in Table 5, the spinning source member (test 5-6) formed of the CNT array having a growth height of more than 1.3 millimeters and less than 2.0 millimeters allows spinning in a length of more than 10 centimeters and of 1 meter or less. As shown in Table 5, the spinning source member (test 5-7) formed of the CNT array having a growth height of 2 millimeters or more allows spinning in a length of 1 centimeter or more and 10 centimeters or less.

A CNT entangled body obtained from a CNT array produced by a method for producing the CNT array as related to the invention is preferably used as electrical wiring, a heater, a stretchable sheet-shaped strain sensor and a transparent electrode sheet, for example.

### Reference Signs List

- 10: Production device
- 12: Electric furnace
- 13: Pressure gauge
- 14: Reaction vessel pipe
- 16: Heater
- 18: Thermocouple
- 20: Control device
- 22: Gas feed device
- 23: Pressure regulating valve
- 24: Exhaust device
- 28: Substrate
- 30: Raw material gas feed unit
- 31: Gas-phase catalyst feed unit
- 32: Gas-phase co-catalyst feed unit
- 33: Auxiliary gas feed unit

## Claims

1. A method for producing a carbon nanotube array for a spinning source member, comprising:
a first step for allowing a substrate having a base surface being a surface formed of a silicon oxide-containing material, as at least part of a surface thereof, to exist in an atmosphere including a gas-phase catalyst; and
a second step for allowing a hydrocarbon-based material gas and a gas-phase co-catalyst to exist in the atmosphere including the gas-phase catalyst to allow a plurality of carbon nanotubes to grow on the base surface of the substrate to obtain on the base surface the carbon nanotube array formed of the plurality of carbon nanotubes,
wherein the second step is applied by feeding the hydrocarbon-based material gas and the gas-phase co-catalyst into the atmosphere including the gas-phase catalyst while flow rates thereof are controlled, and a ratio (gas-phase co-catalyst / hydrocarbon-based material gas) of the flow rate (unit: seem) of feeding the gas-phase co-catalyst to the flow rate (unit: seem) of feeding the hydrocarbon-based material gas is adjusted to be 5% or more and 150% or less,
wherein the base surface in the second step is heated to 8 × 10² K or higher,
wherein the gas-phase co-catalyst includes acetone, and
wherein the total pressure in the atmosphere in the second step is 1 × 10¹ Pa or more and 5 × 10³ Pa or less.

2. The method for producing a carbon nanotube array for a spinning source member according to claim 1, wherein the ratio (gas-phase co-catalyst / hydrocarbon-based material gas) is 5% or more and 120% or less.

3. The method for producing a carbon nanotube array for a spinning source member according to claim 1 or 2, wherein the gas-phase catalyst includes a halide of an iron family element.

4. The method for producing a carbon nanotube array for a spinning source member according to claim 3, wherein the halide of the iron family element includes iron(II) chloride, and the hydrocarbon-based material gas includes acetylene.

## Patentansprüche

1. Verfahren zur Herstellung eines Kohlenstoffnanoröhrenarrays für ein Spinnquellenelement, umfassend:
einen ersten Schritt des Zulassens, dass ein Substrat mit einer Basisoberfläche, welche eine Oberfäche, gebildet aus einem Siliciumoxid-enthaltenden Material, als mindestens ein Teil einer Oberfläche davon ist, in einer Atmosphäre, die einen Gasphasenkatalysator einschließt, existiert, und
einen zweiten Schritt des Zulassens, dass ein Materialgas auf Kohlenwasserstoff-Basis und ein Gasphasen-Co-Katalysator in der Atmosphäre, welche den Gasphasenkatalysator einschließt, existiert, um zuzulassen, dass eine Vielzahl von Kohlenstoffnanoröhren auf der Basisoberfläche des Substrats wächst, um auf der Basisoberfläche den Kohlenstoffnanoröhrenarray, gebildet aus der Vielzahl von Kohlenstoffnanoröhren, zu erhalten,
wobei der zweite Schritt angewendet wird, indem das Materialgas auf Kohlenwasserstoff-Basis und der Gasphasen-Co-Katalysator in die Atmosphäre, welche den Gasphasenkatalysator einschließt, eingespeist werden, wobei die Strömungsraten davon kontrolliert werden, und ein Verhältnis (Gasphasen-Co-Katalysator/Materialgas auf Kohlenwasserstoff-Basis) der Strömungsrate (Einheit: sccm) des Beschickens des Gasphasen-Co-Katalysators zu der Strömungsrate (Einheit: sccm) des Beschickens des Materialgases auf Kohlenwasserstoff-Basis eingestellt wird, 5% oder mehr und 150% oder weniger zu sein,
wobei die Basisoberfläche in dem zweiten Schritt auf 8 x 10² K oder höher erwärmt wird,
wobei der Gasphasen-Co-Katalysator Aceton einschließt, und
wobei der Gesamtdruck in der Atmosphäre in dem zweiten Schritt 1 x 10¹ Pa oder mehr und 5 x 10³ Pa oder weniger beträgt.

2. Verfahren zur Herstellung eines Kohlenstoffnanoröhrenarrays für ein Spinnquellenelement gemäß Anspruch 1, wobei das Verhältnis (Gasphasen-Co-Katalysator/Materialgas auf Kohlenwasserstoff-Basis) 5% oder mehr und 120% oder weniger beträgt.

3. Verfahren zur Herstellung eines Kohlenstoffnanoröhrenarrays für ein Spinnquellenelement gemäß Anspruch 1 oder 2, wobei der Gasphasenkatalysator ein Halogenid eines Elements der Eisenfamilie einschließt.

4. Verfahren zur Herstellung eines Kohlenstoffnanoröhrenarrays für ein Spinnquellenelement gemäß Anspruch 3, wobei das Halogenid des Elements der Eisenfamilie Eisen(II)chlorid einschließt, und das Materialgas auf Kohlenwasserstoff-Basis Acetylen einschließt.

## Revendications

1. Procédé de production d'un réseau de nanotubes de carbone pour un élément de source de filage, comprenant:
une première étape pour permettre à un substrat ayant une surface de base étant une surface formée d'une matière contenant un oxyde de silicium, en tant qu'au moins une partie de la surface de celle-ci, d'exister dans une atmosphère comprenant un catalyseur en phase gazeuse; et
une deuxième étape pour permettre à une matière gazeuse à base d'hydrocarbure et un co-catalyseur en phase gazeuse d'exister dans l'atmosphère comprenant le catalyseur en phase gazeuse pour permettre à une pluralité de nanotubes de carbone de croître sur la surface de base du substrat pour obtenir sur la surface de base, le réseau de nanotubes de carbone formé de la pluralité de nanotubes de carbone,
dans lequel la deuxième étape est appliquée en injectant la matière gazeuse à base d'hydrocarbure et le co-catalyseur en phase gazeuse dans l'atmosphère comprenant le catalyseur en phase gazeuse alors que les débits de ceux-ci sont sous contrôle, et un rapport (co-catalyseur en phase gazeuse / matière gazeuse à base d'hydrocarbure) du débit (unité: sccm) d'injection du co-catalyseur en phase gazeuse au débit (unité: sccm) d'injection de la matière gazeuse à base d'hydrocarbure, est réglé pour être 5% ou plus et 150% ou moins, dans lequel la surface de base à la deuxième étape est chauffée à 8 x 10² K ou plus, dans lequel le co-catalyseur en phase gazeuse comprend de l'acétone, et
dans lequel la pression totale dans l'atmosphère à la deuxième étape est de 1 x 10¹ Pa ou plus et 5 x 10³ Pa ou moins.

2. Procédé de production d'un réseau de nanotubes de carbone pour un élément de source de filage selon la revendication 1, dans lequel le rapport (co-catalyseur en phase gazeuse / matière gazeuse à base d'hydrocarbure) est de 5% ou plus et de 120% ou moins.

3. Procédé de production d'un réseau de nanotubes de carbone pour un élément de source de filage selon la revendication 1 ou 2, dans lequel le catalyseur en phase gazeuse comprend un halogénure d'un élément de la famille du fer

4. Procédé de production d'un réseau de nanotubes de carbone pour un élément de source de filage selon la revendication 3, dans lequel l'halogénure de l'élément de la famille du fer comprend le chlorure de fer(II) et la matière gazeuse à base d'hydrocarbure comprend de l'acétylène.
